# EUROPEAN PATENT APPLICATION

(11) **EP 4 571 464 A1**
(43) Date of publication of application: **18.06.2025**
(21) Application number: 23275175.0
(22) Date of filing: 15.12.2023
(51) Int. Cl.: G06F 3/01, G02B 27/00

(54) **HEAD WORN AUGMENTED REALITY DISPLAY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A control system for a head worn augmented reality device is described, where the head worn augmented reality device comprises a display element and a plurality of haptic feedback devices mounted at spatially separate positions within the device. The haptic feedback devices may be controlled by control signals generated by the control system in order to provide non-visual cues to the wearer. These non-visual cues may provide information about objects outside of the field of view and/or assist with user with positioning the head worn device on their head.

## Description

### FIELD

The present invention relates to an improved head worn augmented reality display device that includes at least two haptic feedback devices configured to provide non-visual cues to the wearer of the device.

### BACKGROUND

Augmented reality (AR) is a technique which enables digital content to be displayed to a user whilst not obscuring their vision. The digital content that is presented may provide additional information about what the user is looking at to assist the user in the task that the user is performing (e.g. by labelling objects within their field of view). Where the user is operating a vehicle (e.g. a land-based vehicle or aircraft) or machinery, the AR device may be a head worn device (HWD) as the user requires their hands to operate the vehicle or machinery. Similarly, where the user's task involves carrying an object, the AR device may be a head worn device so that it does not impede the task that is being performed.

The digital content that is displayed by the head worn AR device may supplement or replace information that might previously have been displayed in an instrument cluster or head-up display within the vehicle or on a control panel of the machinery / equipment. For example, AR may be used to improve the situational awareness of the user by identifying or highlighting features of interest within the field of view of the AR display and/or by providing status information relating to the task, machinery and/or equipment.

### SUMMARY

A control system for a head worn augmented reality device is described, where the head worn augmented reality device comprises a display element and a plurality of haptic feedback devices mounted at spatially separate positions within the device. The haptic feedback devices may be controlled by control signals generated by the control system in order to provide non-visual cues to the wearer. These non-visual cues may provide information about objects outside of the field of view and/or assist with user with positioning the head worn device on their head.

According to an aspect of the present invention, there is provided a control system for a head worn augmented reality device comprising a display element and a plurality of haptic feedback devices mounted at spatially separate positions within the device, the control system comprising a memory and a processor, wherein the memory is arranged to store executable instructions that, when executed by the processor, cause the control system to: receive position data for a wearer of the head worn augmented reality device and information relating to the wearer's surrounding; generate digital content for display within a field of view of a display element in the head worn augmented reality device; generate haptic control signals indicating a feature of interest located outside of the field of view; and output the digital content and the haptic control signals.

The control system in combination with the haptic feedback devices of the head worn augmented reality device provides a wearer with additional situational awareness. This situational awareness may cover a larger volume / area than is depicted on the display of the head worn augmented reality device. By using a different sense to that already used to provide information to the wearer, the additional information does not interfere with existing information streams. This additional information may be particularly useful in environments that change quickly and/or that are safety critical. In addition, or instead, it may enable the amount of visual data that is displayed to be reduce, thereby reducing the potential for visual overload of the wearer.

Generating haptic control signals indicating a feature of interest located outside of the field of view may comprise: identifying a feature of interest outside of the field of view; selecting one or more haptic feedback devices in the head worn augmented reality device based on a relative position of the identified feature of interest and the field of view; and generating haptic control signals for the selected haptic feedback devices.

Generating haptic control signals indicating a feature of interest located outside of the field of view may comprise: identifying a characteristic of the identified feature of interest, and wherein the haptic control signals are generated for the selected haptic control system using the identified characteristic.

The memory may be arranged to store executable instructions that, when executed by the processor, cause the control system operate in a second mode of operation and to: receive eye tracking data for a wearer of the head worn augmented reality device and position and pose information for the head worn augmented reality device; determine a relative position of the wearer's eyes and an eyebox of the head worn augmented reality device; generate haptic control signals indicating a positional misalignment between the eyes and the eyebox; and output the haptic control signals.

Generating haptic control signals indicating a positional misalignment between the eyes and the eyebox may comprise: selecting one or more haptic feedback devices in the head worn augmented reality device based on a relative position of the eyes and the eyebox; and generating haptic control signals for the selected haptic feedback devices.

A second aspect provides a control system for a head worn augmented reality device comprising a display element and a plurality of haptic feedback devices mounted at spatially separate positions within the device, the control system comprising a memory and a processor, wherein the memory is arranged to store executable instructions that, when executed by the processor, cause the control system to: receive eye tracking data for a wearer of the head worn augmented reality device and position and pose information for the head worn augmented reality device; determine a relative position of the wearer's eyes and an eyebox of the head worn augmented reality device; generate haptic control signals indicating a positional misalignment between the eyes and the eyebox; and output the haptic control signals.

The control system in combination with the haptic feedback devices of the head worn augmented reality device reduces the time taken for a wearer to put on the head worn AR device and/or the fitting of the head worn AR device may be improved. This may be particularly beneficial in safety critical situations.

Generating haptic control signals indicating a positional misalignment between the eyes and the eyebox may comprise: selecting one or more haptic feedback devices in the head worn augmented reality device based on a relative position of the eyes and the eyebox; and generating haptic control signals for the selected haptic feedback devices.

A third aspect provides a system comprising a control system as described above and a head worn augmented reality device comprising a display element and a plurality of haptic feedback devices mounted at spatially separate positions within the device.

The head worn augmented reality device may further comprise a headband, wherein the plurality of haptic feedback devices are mounted at radially distributed positions on the headband.

The head worn augmented reality device may further comprise a helmet, wherein the plurality of haptic feedback devices are mounted at radially distributed positions within the helmet.

The head worn augmented reality device may further comprise a receiver for receiving haptic control signals and digital content from a control system.

The control system may be integrated into the head worn augmented reality device.

A fourth aspect provides a method of operation of a control system for a head worn augmented reality device comprising a display element and a plurality of haptic feedback devices mounted at spatially separate positions within the device, the method comprising: receiving position data for a wearer of the head worn augmented reality device and information relating to the wearer's surrounding; generating digital content for display within a field of view of a display element in the head worn augmented reality device; generating haptic control signals indicating a feature of interest located outside of the field of view; and outputting the digital content and the haptic control signals.

Generating haptic control signals indicating a feature of interest located outside of the field of view may comprise: identifying a feature of interest outside of the field of view; selecting one or more haptic feedback devices in the head worn augmented reality device based on a relative position of the identified feature of interest and the field of view; and generating haptic control signals for the selected haptic feedback devices.

Generating haptic control signals indicating a feature of interest located outside of the field of view may comprise: identifying a characteristic of the identified feature of interest, and wherein the haptic control signals are generated for the selected haptic control system using the identified characteristic.

The method may further comprise, in a second mode of operation: receiving eye tracking data for a wearer of the head worn augmented reality device and position and pose information for the head worn augmented reality device; determining a relative position of the wearer's eyes and an eyebox of the head worn augmented reality device; generating haptic control signals indicating a positional misalignment between the eyes and the eyebox; and outputting the haptic control signals.

Generating haptic control signals indicating a positional misalignment between the eyes and the eyebox may comprise: selecting one or more haptic feedback devices in the head worn augmented reality device based on a relative position of the eyes and the eyebox; and generating haptic control signals for the selected haptic feedback devices.

A fifth aspect provides a method of operation of a control system for a head worn augmented reality device comprising a display element and a plurality of haptic feedback devices mounted at spatially separate positions within the device, the method comprising: receiving eye tracking data for a wearer of the head worn augmented reality device and position and pose information for the head worn augmented reality device; determining a relative position of the wearer's eyes and an eyebox of the head worn augmented reality device; generating haptic control signals indicating a positional misalignment between the eyes and the eyebox; and outputting the haptic control signals.

Generating haptic control signals indicating a positional misalignment between the eyes and the eyebox may comprise: selecting one or more haptic feedback devices in the head worn augmented reality device based on a relative position of the eyes and the eyebox; and generating haptic control signals for the selected haptic feedback devices.

### BRIEF DESCRIPTION OF THE FIGURES

Embodiments of the invention will now be described by way of example only with reference to the figures, in which:
Figures 1-4 are schematic diagrams of example improved head worn AR devices;
Figure 5 is a flow diagram of a first example method of operation of a control system for an improved head worn AR device, such as those shown in figures 1-4;
Figures 6-9 show examples of use of the method of figure 5;
Figure 10 is a flow diagram of a second example method of operation of a control system for an improved head worn AR device, such as those shown in figures 1-4;
Figure 11 shows examples of use of the method of figure 10; and
Figure 12 is a schematic diagram of a control system that is configured to perform the methods described herein, such as those shown in figures 5 and 10.

### DETAILED DESCRIPTION

As described above, a head worn AR display may be used to improve the situational awareness of the user by identifying or highlighting features of interest within the field of view (FOV) of the AR display; however, the field of view of an AR device is typically smaller than the extent of vision of the user (which may be referred to as the user's field of regard). To address this, a symbol may be displayed at the edge of the FOV of the AR display to indicate that there is a feature of interest outside the FOV of the AR device and to trigger the user to move their head, and hence the FOV of the AR display, so that the feature of interest is visible within the FOV of the AR display. However, where there is a lot of information (e.g. many symbols) displayed by the AR device, a user may not notice the symbol at the edge of the FOV and hence may not move their head to see the feature of interest that the symbol relates to.

Described herein is an improved head worn AR device that comprises two or more haptic feedback devices (e.g. vibration modules) that are mounted in spatially separate positions within the head worn AR device and are configured to provide non-visual cues to the wearer of the device. The non-visual cues are in the form of vibrations (e.g. nudges, bumps or taps) generated by one or more of the haptic feedback devices and which are transmitted to the head of the wearer. These non-visual cues may supplement the visual information that is displayed by the AR display and/or may be used to assist the wearer in correctly positioning the AR display on their head during a donning procedure (i.e. such that the user's eyes become aligned with the exit pupil of the AR display). The non-visual cues are configured to trigger the wearer to either move their head to change what is visible within the FOV of the AR device (where the position of the AR device is fixed relative to the user's head) or to adjust the relative position between the user's eyes and the AR display exit pupil.

As the improved AR display described herein is head worn, the terms 'user' and 'wearer' are used interchangeably. The head worn device may take the form of glasses, goggles, a headband or similar arrangement that rests on the ears and nose of the wearer but does not encompass the entire head. Alternatively, the head worn device may take the form of a helmet with additional components such as a visor.

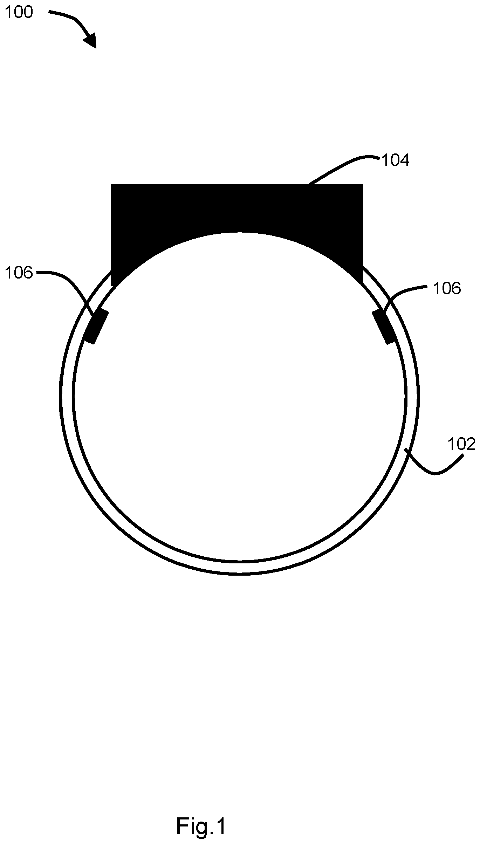

Figure 1 is a schematic diagram of a first example of an improved head worn AR device. The device 100 comprises a headband 102, a display element 104 and two haptic feedback devices 106. The haptic feedback devices 106 comprise modules that can selectively generate physical feedback to the wearer in response to electrical control signals, e.g. in the form of nudges, bumps, taps or other vibration. The haptic feedback devices 106 may comprise vibration modules which vibrate in response to receiving an electrical control signal, from the associated drive electronics (not shown in figure 1).

As shown in figure 1, the two haptic feedback devices 106 are distributed radially around the headband 102 such that one haptic feedback device 106 is to the left of the display element 104 and the other is to the right of the display element 104. The haptic feedback devices 106 in the example of figure 1 are on the inside of the headband 102 such that when the device 100 is worn by a user, they are in contact with the user's head. In variations on that shown in figure 1, they may instead be integrated within the headband 102 or otherwise positioned such that when worn by a user, vibrations generated by the haptic feedback devices 106 are transmitted to the user's head. When worn by a user, the haptic feedback devices 106 may be in contact with the wearer's brow, temples, or other parts of their head. The haptic feedback devices 106 may be positioned on the headband 102 so that they are below a wearer's hairline (e.g. an average hairline position as defined across a group of people) to improve the transmission of the vibrations from the haptic feedback devices 106 to the user.

In some implementations, the haptic feedback devices 106 may be positioned at the left and right extremes of the display element 104 and this may result in them being aligned with a wearer's brow (e.g. at a left and right edge of their forehead) or left and right temples, depending upon the size and shape of the display element 104. In other implementations they may be positioned independently of (and separately from) the display element 104 and this may enable a larger radial spacing of the haptic devices, e.g. such that they are positioned close to each ear of the wearer (e.g. in front of or behind each ear).

The device 100 shown in figure 1 may take the form of glasses or goggles or similar arrangement such that the headband 102 comprises portions which are shaped to contact around the head, or rest on the ears of the wearer and either the headband 102 or the display element 104 comprises one or more portions that are shaped to be located near to or rest on the nose of the wearer. Alternatively, the device 100 may take the form of a helmet, with the headband 102 mounted within the helmet liner or forming part of the helmet structure and the display element 104 integrated internal to or in conjunction with the visor of the helmet.

The display element 104 comprises an image source and an optical arrangement that presents the image, which comprises the digital content, to the wearer in a manner that does not obscure their vision. The image source, which may be a DLP, LCoS, OLEDor LED display, is typically not positioned in front of the wearer's eyes (e.g. because it is not transparent). The optical arrangement in the display element 104 may comprise lenses, prisms, mirrors and/or waveguides to project the image that is generated by the image source so that it is visible by the wearer. In some implementations, the display element 104 may comprise two image sources, one which generates an image for the wearer's left eye and one which generates an image for the wearer's right eye, and the optical arrangement may have two distinct optical paths, one for each eye. Any suitable image source and optical arrangement may be used and various examples are described in the following international patent applications: WO2023021272A1, WO2023199050A1 and WO2019122808A1.

The display element 104 (and in particular the image source within the display element 104) and the haptic devices 106 receive control signals from a control system which generates both the digital information (which may comprise visual cues for the wearer) and the non-visual cues. As described above, the digital information is presented to the wearer by the display element 104 and the non-visual cues are provided to the wearer by selective operation of the haptic devices 106 (i.e. by controlling the vibration patterns of one or more of the haptic devices 106). The control system may be part of the device 100, or alternatively, it may be implemented separately and the device 100 may comprise a receiver (not shown in figure 1) arranged to receive the control signals from the control system and transmit them to the display element 104 and haptic feedback devices 106. The nature of the control signals and the operation of the control system is described in more detail below.

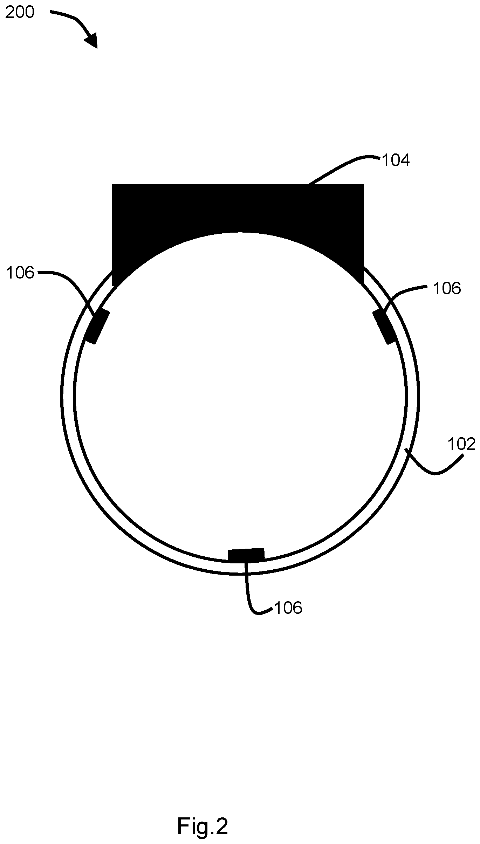

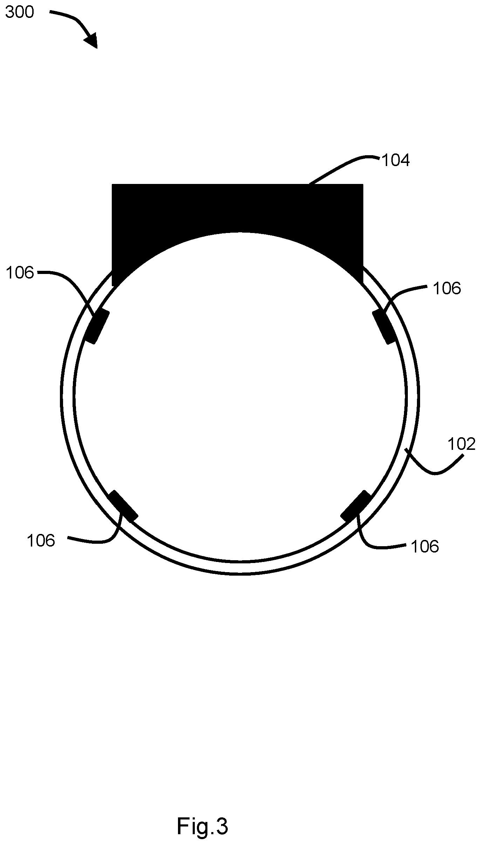

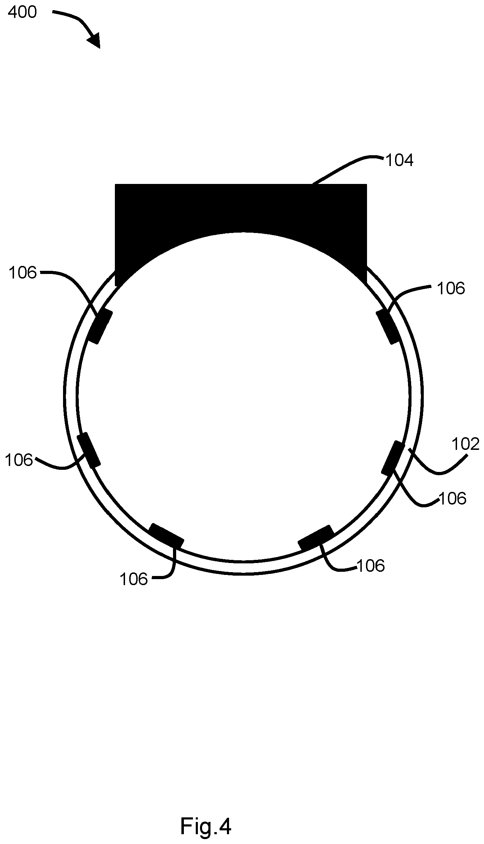

Figures 2, 3 and 4 are schematic diagrams of further examples of an improved head worn AR device which are a variation of that shown in figure 1 and described above. The device 200 in figure 2 comprises three haptic feedback devices 106 positioned on the headband 102 so that they are to the left, right and rear of the wearer's head. The devices 300, 400 in figures 3 and 4 comprise four and six haptic feedback devices 106 respectively arranged radially around the headband 102 between the left and right extremes of the display element 106. Whilst the examples shown in figures 1-4 show 2, 3, 4 and 6 haptic feedback devices 106 respectively, it will be appreciated that other numbers of haptic feedback devices 106 may alternatively be included in the improved head worn AR device.

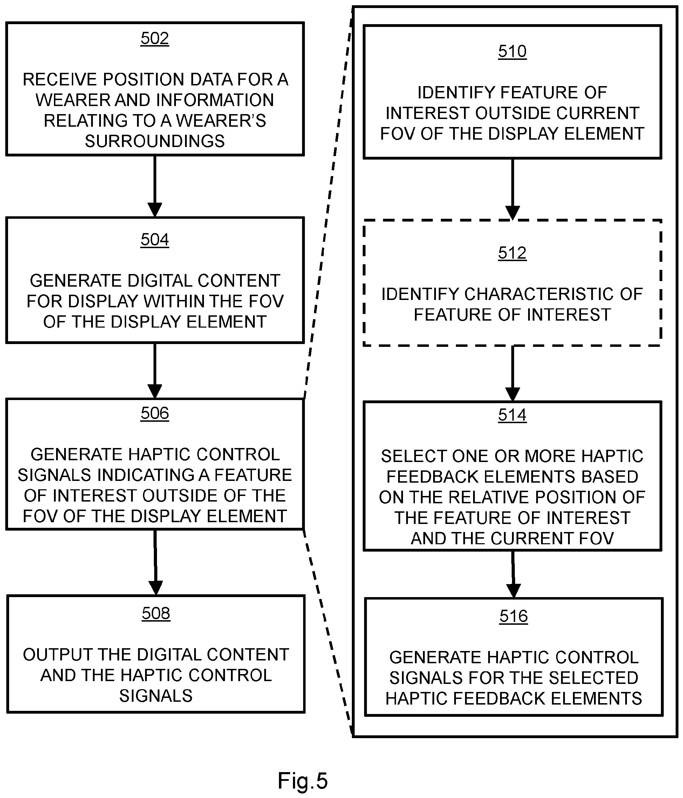

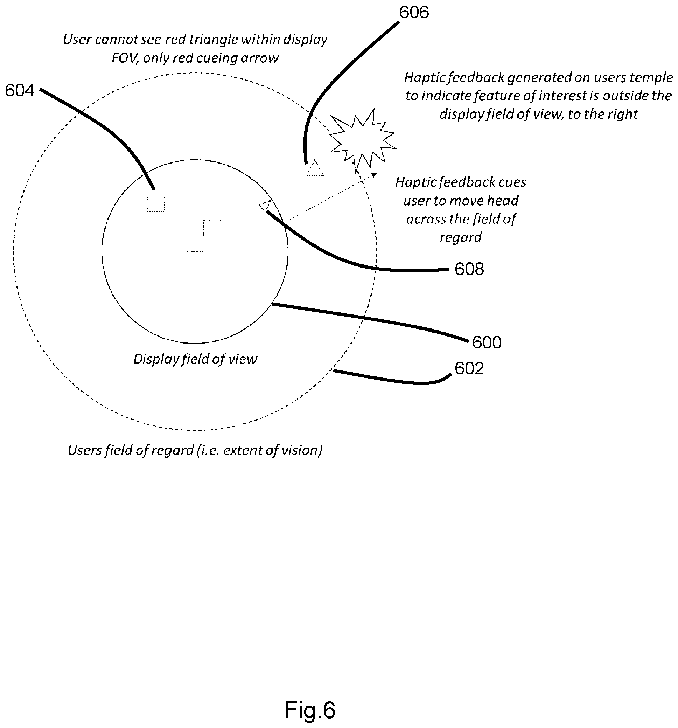

Figure 5 is a flow diagram of a first example method of operation of a control system for an improved head worn AR device, such as those shown in figures 1-4 and described above. This method of operation can be described with reference to the examples shown in figures 6-9. As described above, the control system may be part of the improved head worn AR device 100, 200, 300, 400, or alternatively, it may be implemented separately and the improved head worn AR device 100, 200, 300, 400 may comprise a receiver (not shown in figures 1-4) arranged to receive the control signals from the control system. The method of figure 5 provides non-visual cues to a wearer of the head worn AR device which supplements the visual information that is displayed by the AR device.

As shown in figure 5, the control system receives position data for a wearer of the head worn AR device and information relating to the wearer's surroundings (block 502). The position data for the wearer that is received may be received from the head worn AR device and/or from another entity. This position data may include the position of the device (e.g. a GPS location) and pose information (i.e. information that defines the orientation of the head worn AR device). The pose information may be determined using one or more sensors (e.g. accelerometers) within the head worn AR device or from an eye or head tracker.

The information relating to the wearer's surroundings may be received from one or more sensors which may be mounted on the head worn AR device or separately (e.g. on the vehicle that that the wearer is in, on the equipment / machinery that the wearer is operating, etc.). In addition, or instead, the information relating to the wearer's surroundings may be received from a separate system that receives and processes data from a plurality of sensors. Where the control system receives sensor data, it processes the data to identify features of interest, where the term feature of interest' is used herein to refer to any point in space (which may correspond to an object or a point on an object) that is to be flagged to the wearer. Where the sensor data is processed by a separate system, the information received by the control system relating to the surroundings (in block 502) may comprise information on one or more features of interest (e.g. position data for a feature of interest and metadata defining the feature of interest).

Using the data that is received (in block 502), the control system generates digital content for display within the field of view of the display element 104 of the head worn AR device (block 504) and haptic control signals indicating a feature of interest that is outside the field of view of the display element 104 (block 506). The haptic control signals that are generated are dependent upon the relative position of the feature of interest and the field of view of the display element (i.e. the current FOV) and the arrangement of haptic feedback devices 106 within the head worn AR device (which is fixed for the particular device). The vibrations that are caused by the haptic control signals therefore indicate to the wearer of the head worn AR device, the position of the feature of interest relative to their current head position. The haptic control signals that are generated may be based on the relative angular position of the feature of interest and the field of view of the display element, such that they indicate to the wearer which way they should move their head to see the feature of interest. The haptic control signals may also be based on the distance between the feature of interest and the head worn AR device, such that they provide an indication of how close the feature of interest is to the wearer (e.g. the control signals may result in more intense vibrations for features of interest that are closer to the wearer compared to features of interest that are further away).

The haptic control signals that are generated may also be dependent upon the nature of the feature of interest (i.e. dependent on the metadata defining the feature of interest), such that the control signals cause different vibration patterns to be generated by the haptic feedback devices 106 for different types of features of interest. In such an implementation, the vibrations that are caused by the haptic control signals indicate to the wearer of the head worn AR device, both the position of the feature of interest relative to their current head position and the nature of that feature of interest.

Having generated the digital content (in block 504) and the haptic control signals (in block 506), they are output (block 508). In implementations where the control system is part of the improved head worn AR device 100, 200, 300, 400, the digital content and control signals that are generated (in blocks 504 and 506) are output to the display element 104 and haptic feedback devices 106 respectively (in block 508). In implementations where the control system is implemented separately, the digital content and control signals that are generated (in blocks 504 and 506) are output to the improved head worn AR device 100, 200, 300, 400 (in block 508), e.g. over a wireless link.

Figure 5 also shows a more detailed implementation of the step of generating the haptic control signals (block 506). A feature of interest that is outside the current field of view is identified (block 510) using the information relating to the wearer's surroundings (as received in block 502). Optionally, a characteristic of this identified feature of interest (from block 510) may also be identified (block 512). This characteristic may be a classification of the feature of interest (e.g. an object type) or a proximity characteristic (e.g. near / mid / far from the wearer).

One or more haptic feedback elements are selected from those in the improved head worn AR device based on the relative position of the identified feature of interest and the current field of view of the display element (block 514). As noted above, the arrangement of haptic feedback elements is fixed for a particular head worn AR device (or type of head worn AR device) and may be provided as an input to the method of figure 5. Each of the haptic feedback elements in the head worn AR device therefore has a fixed relative position to the head position of the wearer and hence to the current field of view of the display element. As described above, the vibrations that are caused by the haptic control signals are to indicate to the wearer of the head worn AR device, the position of the feature of interest relative to their current field of view (which corresponds to their current head position) and so one or more haptic feedback elements may be selected which have a relative position which most closely matches the relative position of the identified feature of interest.

A look-up table, or other data structure, may store a mapping between the relative position of the identified feature of interest and which of the haptic feedback elements are to be selected (in block 514). Use of mappings in this way to perform the selection (in block 514) may assist in providing positional information to the wearer, particularly where there are only a small number of haptic feedback devices. An example mapping for the device 100 shown in figure 1 is provided in table 1 below with an X in the second or third columns indicating that the respective haptic feedback device should be selected.

**Table 1:**

| Relative position of feature of interest | Left haptic feedback device | Right haptic feedback device |
|---|---|---|
| Right of current FOV | | X |
| Left of current FOV | X | |
| Above current FOV | X | X |

An example mapping for the device 200 shown in figure 2 is provided in table 2 below with an X in the second, third or fourth columns indicating that the respective haptic feedback device should be selected. The addition of the third haptic feedback device enables more information to be provided to the wearer and this may enable more precise location of the feature of interest and/or a larger range of angles that can be covered (as in the example below).

**Table 2:**

| Relative position of feature of interest | Left haptic feedback device | Right haptic feedback device | Rear haptic feedback device |
|---|---|---|---|
| Right of current FOV | | X | |
| Left of current FOV | X | | |
| Above current FOV | X | X | |
| Behind wearer | | | X |
| Above and behind wearer | X | X | X |

Haptic control signals are then generated for the selected haptic feedback elements (block 516). The nature of the haptic control signals may be dependent upon the identified characteristic of the feature of interest (e.g. such that different identified characteristics result in the generation of signals that cause different vibration patterns).

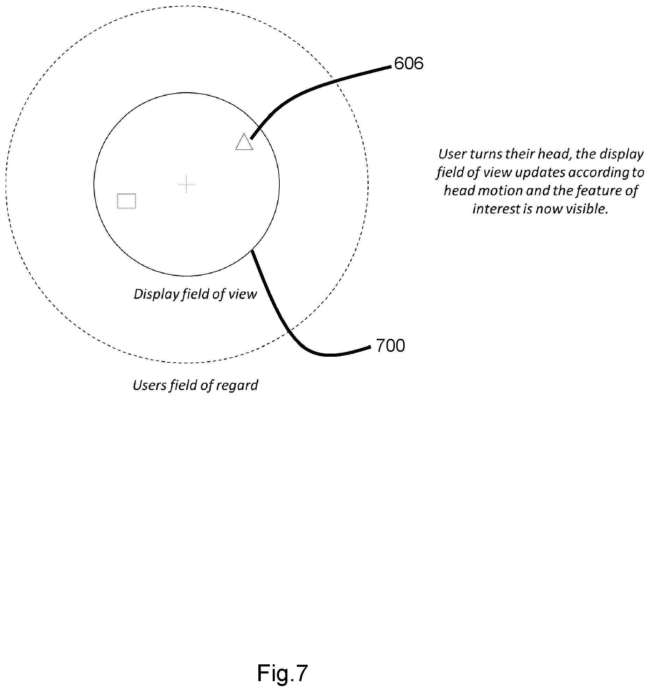

A first example of the use of the method of figure 5 can be described with reference to figures 6 and 7. Figure 6 shows an example field of view 600 of a display element in a head worn AR device and a larger field of regard 602 which corresponds to the extent of the wearer's vision (i.e. this is the wearer's field of view without moving their head). As shown in figure 6, digital content (e.g. symbols 604) are displayed within the field of view 600 and haptic control signals are generated to indicate features of interest that are within the field of regard 602 but outside the field of view 600. In figure 6, the feature of interest that is outside the field of view 600 but inside the field of regard 602 is shown as a symbol 606 for purposes of explanation but it will be appreciated that this will not be rendered as part of the digital content as it is outside the field of view 600 of the display element. In this example, a symbol 608 is shown at the edge of the field of view 600 to indicate the presence and position of a feature of interest that is outside the current field of view 600 but within the field of regard 602; however as described above, display of such a symbol is optional.

Based on the relative position of the feature of interest 606 that is outside the current field of view 600 of the display, a haptic control signal is generated and output to a haptic feedback device positioned at a wearer's right temple (e.g. this may correspond to the first row in the example mapping in table 1 above).

In response to feeling the vibrations, the wearer may move their head to the right. The motion of the head changes which features of interest can be seen within the field of view of the display and the updated field of view 700 is shown in figure 7. As shown, the symbol 606 corresponding to the feature of interest that was previously outside the field of view 600 is now within the updated field of view 700.

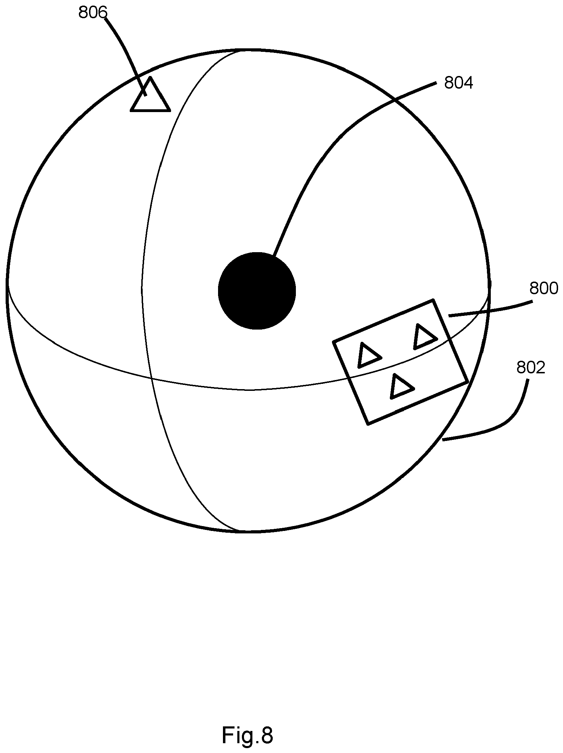

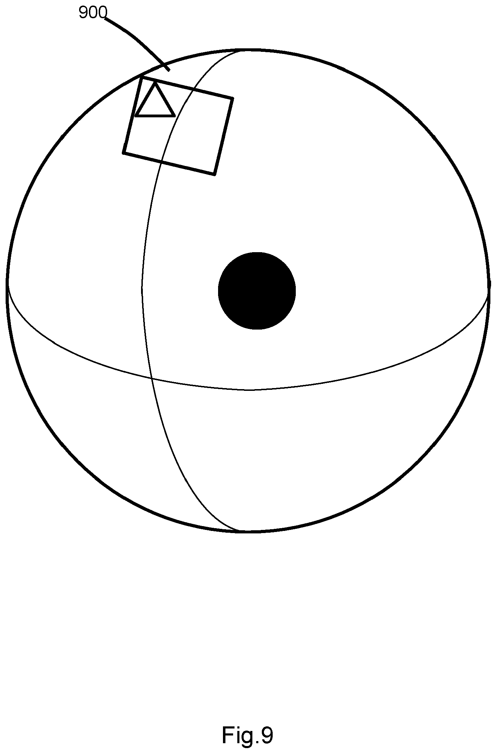

A second example of the use of the method of figure 5 can be described with reference to figures 8 and 9. Figure 8 shows a 3D view of an example field of view 800 of a display element in a head worn AR device and a larger sphere of information 802 which surrounds the wearer's head 804 (and hence surrounds the head worn AR device). Digital content is displayed within the field of view 800 and haptic control signals are generated to indicate features of interest that are within the sphere of information 802 but outside the field of view 800. In figure 8, the feature of interest that is outside the field of view 800 but inside the sphere of information 802 is shown as a triangle 806 for purposes of explanation but it will be appreciated that this will not be rendered as part of the digital content as it is outside the field of view 800 of the display element.

Based on the relative position of the feature of interest 806 that is outside the current field of view 800 of the display, a haptic control signal is generated. In this example, the feature of interest 806 is above and behind the wearer and depending upon the defined mapping one or more haptic devices may be selected. For the device 200 shown in figure 2 and using the mappings in table 2 above, haptic control signals may be generated and output to all three haptic feedback devices 106 in the head worn AR device 200.

In response to feeling the vibrations, the wearer may rotate their head and look up. The motion of the head changes which features of interest can be seen within the field of view of the display and the updated field of view 900 is shown in figure 9. As shown, the symbol corresponding to the feature of interest that was previously outside the field of view 800 is now within the updated field of view 900.

By using the method of figure 5, the head worn AR device provides a wearer with additional situational awareness. By using a different sense to that already used to provide information to the wearer (i.e. touch rather than sight or sound), the additional information does not interfere with existing information streams. This additional information may be particularly useful in environments that change quickly (e.g. in a moving vehicle) and/or that are safety critical.

The use of the method of figure 5 may enable a reduction in the amount of visual information provided (e.g. by omitting markers 608 that indicate a feature of interest that is outside the current field of view) and reduce the potential for visual overload of the wearer.

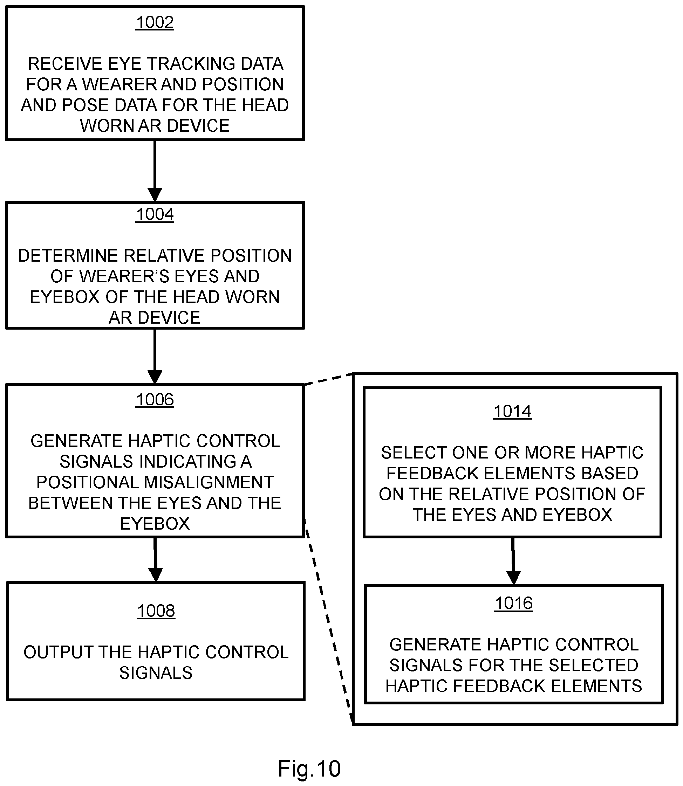

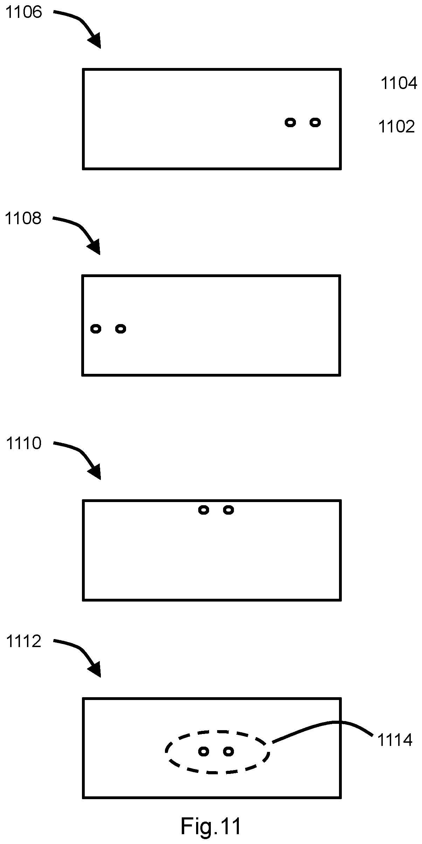

Figure 10 is a flow diagram of a second example method of operation of a control system for an improved head worn AR device, such as those shown in figures 1-4 and described above. This method of operation may be used in combination with, or independently of, the method shown in figure 5 and described above. The method of operation shown in figure 10 can be described with reference to the example shown in figure 11. As described above, the control system may be part of the improved head worn AR device 100, 200, 300, 400, or alternatively, it may be implemented separately and the improved head worn AR device 100, 200, 300, 400 may comprise a receiver (not shown in figures 1-4) arranged to receive the control signals from the control system. The method of figure 10 provides non-visual cues to a wearer of the head worn AR device which assist the wearer in correctly positioning the AR device on their head (i.e. such that the user's eyes are aligned with the exit pupil of the AR display). Unlike the method of figure 5, where the position of the AR device is fixed relative to the wearer's head (and hence eyes), the method of figure 10 may be used as part of a fitting process (e.g. whenever the AR device is put on by the wearer, to align the eyebox, or exit pupil, of the AR display with the users pupil) and so triggers the user to adjust the position of the AR device on their heads.

As shown in figure 5, the control system receives eye tracking data for a wearer of the head worn AR device (block 1002). The eye tracking data is received from an eye tracking system that may be part of, or external to, the control system. The eye tracking data identifies the position of the wearer's eyes and may also identify their gaze direction. Position and pose data for the head worn AR device is also received (e.g. from sensors within the head worn AR device and/or external sensors). In some examples the position data may be the position data for the wearer or a vehicle that the wearer is in, rather than specific position data for the head worn AR device itself, or the position data for the head worn AR device may be inferred from the sensed position of the wearer or the vehicle.

Using the eye tracking data and position and pose data for the AR device (received in block 1002), the relative position of the wearer's eyes and the eyebox of the head worn AR device is determined (block 1004). The eyebox is a volume in space in which the wearer's eyes need to be located in which to view the digital content rendered by the display element 104 of the head worn AR device. The position of the eyebox is therefore fixed relative to the head worn AR device and its position in real-world space can be determined from the position and pose data for the AR device. The relative position that is determined (in block 1004) may be between the point between the wearer's eyes and the centre of the eyebox.

Haptic control signals are then generated to indicate any positional misalignment between the wearer's eyes and the eyebox (block 1006) and indicate to the wearer how they should adjust the position of the AR device on their head in order to reduce the positional misalignment and hence better align their eyes with the eyebox, to ensure the AR display FOV is correctly visible.

Having generated the haptic control signals (in block 1006), they are output (block 1008). In implementations where the control system is part of the improved head worn AR device 100, 200, 300, 400, the control signals that are generated (in block 1006) are output to the haptic feedback devices 106 (in block 1008). In implementations where the control system is implemented separately, the control signals that are generated (in block 1006) are output to the improved head worn AR device 100, 200, 300, 400 (in block 1008), e.g. over a wireless link.

Figure 10 also shows a more detailed implementation of the step of generating the haptic control signals (block 1006). Using the relative position (as determined in block 1004), one or more haptic feedback elements are selected (block 1014). As noted above, the arrangement of haptic feedback elements is fixed for a particular head worn AR device (or type of head worn AR device) and may be provided as an input to the method of figure 10. Each of the haptic feedback elements in the head worn AR device therefore has a fixed relative position to the head position of the wearer. As described above, the vibrations that are caused by the haptic control signals are to indicate to the wearer of the head worn AR device how they should adjust its position on their head to improve the alignment between their eyes and the eyebox (and hence reduce any misalignment) and so one or more haptic feedback elements may be selected which have a relative position which most closely matches the required adjustment.

In an example, if the eye tracker system determines (in block 1004) that the exit pupil of the display is +2mm to the right of the centre of the wearer's pupils, the haptic devices are enabled on the left of the headband (in block 1006). If, in response, the wearer loosens the headband (or other fixing mechanism for the head worn AR device) and adjusts it (e.g. shuffles it) left, the intensity of the haptic device lessens as the exit pupil starts to align better with the users pupil (i.e. the haptic control signals generated in block 1006 are modified in response to detecting a smaller offset in block 1004). Once the wearer has adjusted the head worn AR device so that no misalignment is detected (in block 1004), no control signals are generated (in block 1006) and so the haptic device ceases operation and the wearer user knows that the head worn AR device is now correctly positioned and they should re-tighten the headband.

A look-up table, or other data structure, may store a mapping between the relative position (as determined in 1004) and which of the haptic feedback elements are to be selected (in block 1014). Use of mappings in this way to perform the selection (in block 1014) may assist in providing positional information to the wearer, particularly where there are only a small number of haptic feedback devices. An example mapping for the device 100 shown in figure 1 is provided in table 3 below with an X in the second or third columns indicating that the respective haptic feedback device should be selected. The three relative positions of the eyes 1102 and the eyebox 1104 are shown graphically in figure 11.

**Table 3:**

| Relative position of eyes to eyebox centre | Left haptic feedback device | Right haptic feedback device |
|---|---|---|
| Eyes to right of eyebox centre (example 1106) | | X |
| Eyes to left of eyebox centre (example 1108) | X | |
| Eyes above eyebox centre (example 1110) | X | X |

Where there are more than two haptic feedback devices, these may be used to provide more granular data about the positional misalignment or only a subset of the haptic feedback devices may be used (e.g. the mapping of table 3 may be used with any of the devices 100-400 shown in figures 1-4 and described above).

Haptic control signals are then generated for the selected haptic feedback elements (block 1016). The nature of the haptic control signals may be dependent upon the magnitude of the misalignment (e.g. such that larger misalignments result in the generation of signals that cause more vibration patterns with a larger amplitude and/or frequency than smaller misalignments or such that larger misalignments result in a large number of nudges/taps than smaller misalignments).

The method of figure 10 may be triggered by a user placing the head worn AR device into a predefined mode (e.g. a fitting mode) and the method may be terminated by the user switching to a different mode (e.g. an operational mode) or when the positional misalignment falls below a predefined threshold, e.g. when the eyes fall within a region 1114 defined at the centre of the eyebox 1104 as shown in the fourth example 1112 in figure 11. Whilst in the predefined mode, the method of figure 10 may operate periodically or continuously to provide feedback when the user adjusts the position of the head worn AR device (e.g. if they start out as shown in example 1106 and then overcorrect to the position shown in example 1108 before moving to the position shown in example 1112).

By using the method of figure 10, the time taken for a wearer to put on the head worn AR device is reduced and the fitting of the head worn AR device may be improved (e.g. because it may be difficult for a wearer to otherwise determine that their eyes are positioned at the centre of the eyebox, unless a specific procedure is followed). This may be particularly beneficial in safety critical situations.

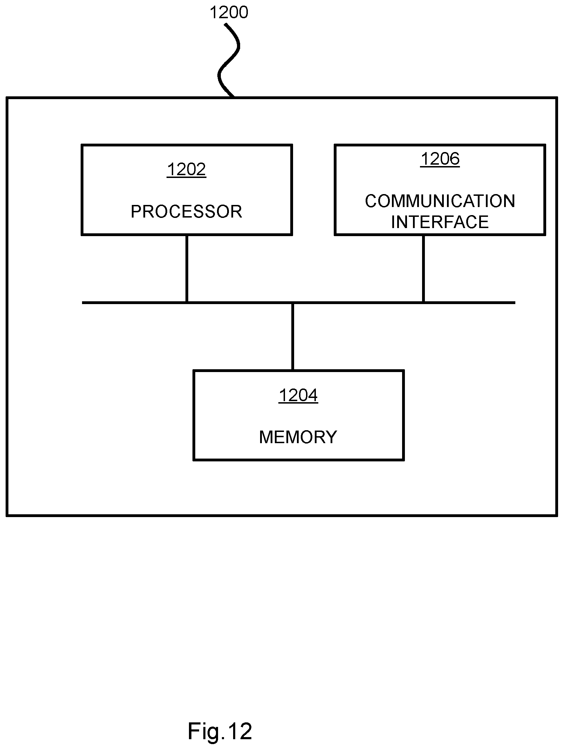

Figure 12 is a schematic diagram of a control system 1200 that performs the methods described above. As described above, the control system 1200 may be part of the improved head worn AR device 100, 200, 300, 400, or alternatively, it may be implemented separately and transmit the control signals and digital content (for the method of figure 5) to the head worn AR device. It will be appreciated that the control system 1200 may also be configured to perform other methods in addition to those described above.

The control system comprises one or more processors 1202 which may be microprocessors, controllers or any other suitable type of processors for processing computer executable instructions to control the operation of the device in order to perform the methods described herein. In some examples, for example where a system on a chip architecture is used, the processors 1202 may include one or more fixed function blocks (also referred to as accelerators) which implement a part of the methods described herein in hardware (rather than software or firmware). Platform software comprising an operating system or any other suitable platform software may be provided at the control system to enable application software to be executed on the system.

The computer executable instructions that configure the control system to perform the methods described herein may be provided using any computer-readable media that is accessible by the control system 1200. Computer-readable media may include, for example, computer storage media such as memory 1204 and communications media. Computer storage media, such as memory 1204, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 1204) is shown within the control system 1200 it will be appreciated that the storage may be distributed or located remotely and accessed via a network or other communication link (e.g. using communication interface 1206).

The communication interface 1206 is arranged to receive data, such as position data, sensor data, eye tracking data, or any other data required to perform the methods described above (e.g. the data received in blocks 502 and 1002). The communication interface 1206 is also arranged to output the digital content and haptic control signals (in blocks 508 and 1108).

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

## Claims

1. A control system (1200) for a head worn augmented reality device comprising a display element and a plurality of haptic feedback devices mounted at spatially separate positions within the device, the control system comprising a memory (1204) and a processor (1202), wherein the memory is arranged to store executable instructions that, when executed by the processor, cause the control system to:
receive position data for a wearer of the head worn augmented reality device and information relating to the wearer's surrounding (502);
generate digital content for display within a field of view of a display element in the head worn augmented reality device (504);
generate haptic control signals indicating a feature of interest located outside of the field of view (506); and
output the digital content and the haptic control signals (508).

2. The control system according to claim 1, wherein generating haptic control signals indicating a feature of interest located outside of the field of view comprises:
identifying a feature of interest outside of the field of view (510);
selecting one or more haptic feedback devices in the head worn augmented reality device based on a relative position of the identified feature of interest and the field of view (514); and
generating haptic control signals for the selected haptic feedback devices (516).

3. The control system according to claim 2, wherein generating haptic control signals indicating a feature of interest located outside of the field of view comprises:
identifying a characteristic of the identified feature of interest (512), and wherein the haptic control signals are generated for the selected haptic control system using the identified characteristic.

4. The control system according to any of the preceding claims, wherein the memory is arranged to store executable instructions that, when executed by the processor, cause the control system operate in a second mode of operation and to:
receive eye tracking data for a wearer of the head worn augmented reality device and position and pose information for the head worn augmented reality device (1002);
determine a relative position of the wearer's eyes and an eyebox of the head worn augmented reality device (1004);
generate haptic control signals indicating a positional misalignment between the eyes and the eyebox (1006); and
output the haptic control signals (1008).

5. The control system according to claim 4, wherein generating haptic control signals indicating a positional misalignment between the eyes and the eyebox comprises:
selecting one or more haptic feedback devices in the head worn augmented reality device based on a relative position of the eyes and the eyebox (1014); and
generating haptic control signals for the selected haptic feedback devices (1016).

6. The control system according to any of the preceding claims, wherein the memory is further arranged to store executable instructions that, when executed by the processor, cause the control system to:
receive eye tracking data for a wearer of the head worn augmented reality device and position and pose information for the head worn augmented reality device (1002);
determine a relative position of the wearer's eyes and an eyebox of the head worn augmented reality device (1004);
generate haptic control signals indicating a positional misalignment between the eyes and the eyebox (1006); and
output the haptic control signals (1008).

7. The control system according to claim 6, wherein generating haptic control signals indicating a positional misalignment between the eyes and the eyebox comprises:
selecting one or more haptic feedback devices in the head worn augmented reality device based on a relative position of the eyes and the eyebox (1014); and
generating haptic control signals for the selected haptic feedback devices (1016).

8. A system comprising a control system according to any of the preceding claims and a head worn augmented reality device comprising a display element and a plurality of haptic feedback devices mounted at spatially separate positions within the device.

9. The system according to claim 8, wherein the head worn augmented reality device further comprises a headband (102), wherein the plurality of haptic feedback devices are mounted at radially distributed positions on the headband.

10. The system according to claim 8, wherein the head worn augmented reality device further comprises a helmet, wherein the plurality of haptic feedback devices are mounted at radially distributed positions within the helmet.

11. The system according to any of claims 8-10, wherein the head worn augmented reality device further comprises a receiver for receiving haptic control signals and digital content from a control system.

12. The system according to any of claims 8-11, wherein the control system is integrated into the head worn augmented reality device.

13. A method of operation of a control system (1200) for a head worn augmented reality device comprising a display element and a plurality of haptic feedback devices mounted at spatially separate positions within the device, the method comprising:
receiving position data for a wearer of the head worn augmented reality device and information relating to the wearer's surrounding (502);
generating digital content for display within a field of view of a display element in the head worn augmented reality device (504);
generating haptic control signals indicating a feature of interest located outside of the field of view (506); and
outputting the digital content and the haptic control signals (508).

14. The method system according to claim 13, wherein generating haptic control signals indicating a feature of interest located outside of the field of view comprises:
identifying a feature of interest outside of the field of view (510);
selecting one or more haptic feedback devices in the head worn augmented reality device based on a relative position of the identified feature of interest and the field of view (514); and
generating haptic control signals for the selected haptic feedback devices (516).

15. The method according to claim 13 or 14, further comprising:
receiving eye tracking data for a wearer of the head worn augmented reality device and position and pose information for the head worn augmented reality device (1002);
determining a relative position of the wearer's eyes and an eyebox of the head worn augmented reality device (1004);
generating haptic control signals indicating a positional misalignment between the eyes and the eyebox (1006); and
outputting the haptic control signals (1008).
